# EUROPEAN PATENT APPLICATION

(11) **EP 1 247 445 A2**
(43) Date of publication of application: **09.10.2002**
(21) Application number: 02077630.8
(22) Date of filing: 25.11.1998
(51) Int. Cl.: A01J 5/017

(54) **An implement for milking animals**

(30) Priority: 28.11.1997 NL 1007642
(62) Divisional of application: 98957230.0
(71) Applicant: MAASLAND N.V., 3155 PD Maasland (NL)
(72) Inventor: van der Lely, Cornelis, 6300 Zug (CH)
(74) Representative: Corten, Maurice Jean F.M.

(57) **Abstract**

An implement for milking animals, which implement comprises a milking robot (7) including a number of robot arms (8). The robot arms (8) comprise at least one hingeable construction (9, 10, 11), such as a quadrangular hinge construction or a parallelogram construction, of which at least one hinge point (19) is provided with a ball bearing. Preferably all hinge points of the hingeable construction (9, 10, 11) are provided with ball bearings. Preferably at least one hinge point of the hingeable construction (9, 10, 11) is provided with a clinometer for determining the orientation of the robot arm (8).

## Description

The invention relates to an implement for milking animals as described in the preamble of claim 1.

Implements are known in which the milking members are also used for pre-treatment of the teats of an animal to be milked. This has inter alia the disadvantage that the milking members are contaminated, so that they have to be cleaned before milking, which is a time consuming and laborious process. Furthermore implements are known in which pre-treatment members are positioned with the aid of separate robot arms. Such implements are laborious and expensive. Finally implements are known in which one single robot arm is used to position milking members and a pre-treatment member.

The invention aims at obviating the above-mentioned drawbacks and to provide an implement which on the one hand can be controlled in a simple and accurate manner and on the other hand is adapted to operate quickly and efficiently. According to the invention this is achieved by means of the measures mentioned in the characterizing part of claim 1. Such ball bearings enable the hingeable construction to carry out the movements imposed by the control mechanism of the milking robot more quickly. Moreover such bearings only need to be greased once.

In accordance with a further inventive feature, all hinge points of the hingeable construction are provided with ball bearings, so that the entire robot arm can move more quickly. According to a further inventive feature, at least one hinge point of the hingeable construction is provided with a clinometer for determining the orientation of the robot arm.

The invention will be explained in further detail with reference to the accompanying drawings.
Figure 1 is a side view of the implement for automatically milking animals;
Figure 2 is a plan view of the implement shown in Figure 1;
Figure 3 is a rear view of the implement of Figures 1 and 2;
Figure 4 is a schematic side view of a robot arm;
Figure 5 is a cross-section taken on the line V - V in Figure 4;
Figure 6 is a plan view of a detail of the robot arm of Figure 4 according to the arrow VI in the latter figure;
Figure 7 is a schematic cross-section taken on the line VII - VII in Figure 2, and
Figure 8 shows schematically another embodiment of the implement.

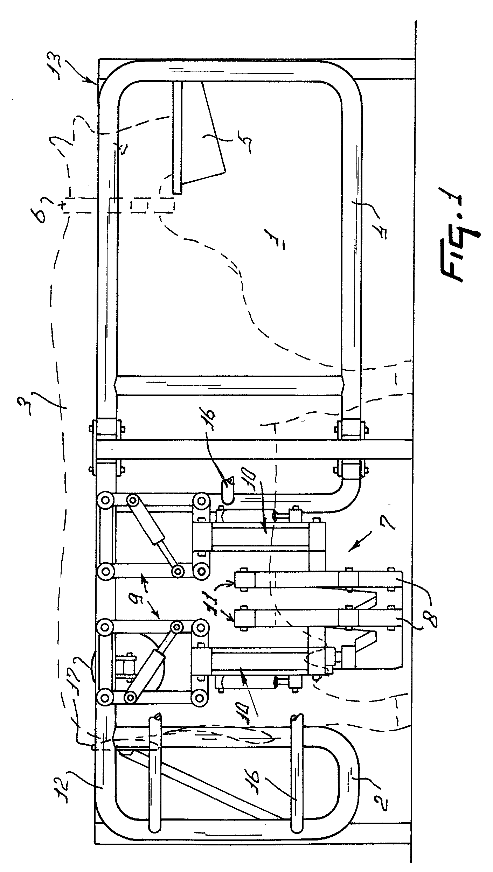

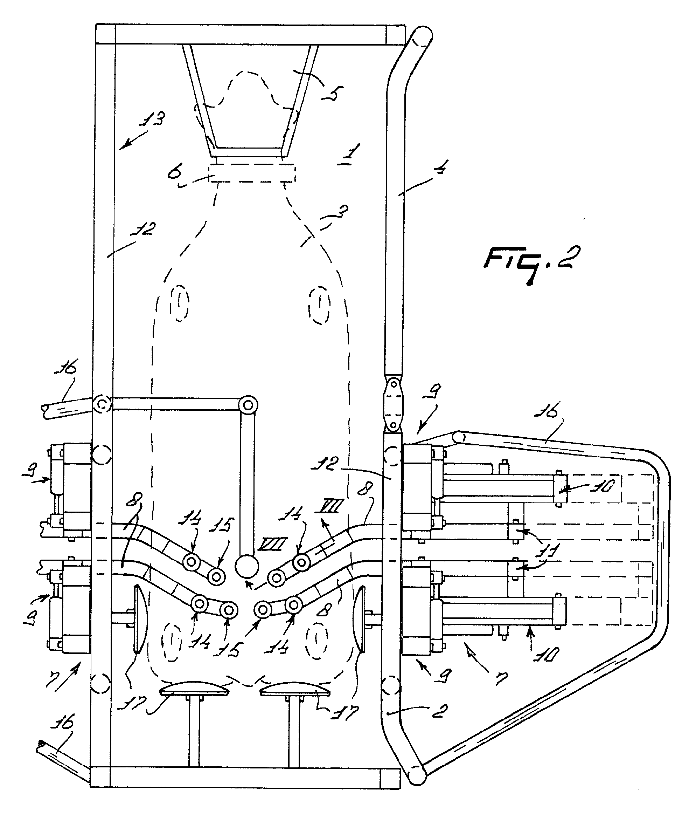

Figures 1, 2 and 3 are a side view, a plan view and a rear view respectively of the implement for automatically milking animals according to the invention. The implement comprises a milk stand in a milkbox 1 which is provided in longitudinal direction at one lateral side with an entrance door 2 via which an animal 3 to be milked can enter the milkbox 1, and an exit door 4 via which the animal 3 can leave the milkbox 1. In the front part of the milkbox 1 there is provided a feed trough 5 in which fodder, such as e.g. concentrate, can be fed to the animal 3 by means of a (non-shown) fodder metering system. The entrance door 2 and the exit door 4 can be operated automatically by means of a non-shown computer. The animal 3 is provided with a collar 6 with a transponder which is adapted to cooperate with a (non-shown) animal identification system, so that the animal 3 in the milkbox 1 can be automatically identified. Of course it is also possible to connect the transponder to the animal 3 in another manner, e.g. by injecting same.

The milkbox 1 further comprises a milking robot 7 having a number of (e.g. four) robot arms 8 for positioning means for treating the teats of the animal 3 to be milked. The robot arms 8 are each fastened to upper beams 12 of a frame 13 of the milkbox 1 by means of three hingeable constructions, such as e.g. parallelogram constructions 9, 10 and 11. The parallelogram constructions 9, 10 and 11 can be automatically controlled by means of non-shown control means and enable each of the robot arms 8 to carry out movements in three dimensions. The control means may comprise servo-pneumatic and/or servo-hydraulic cylinders (see Figures 1 - 3) and/or stepper motors.

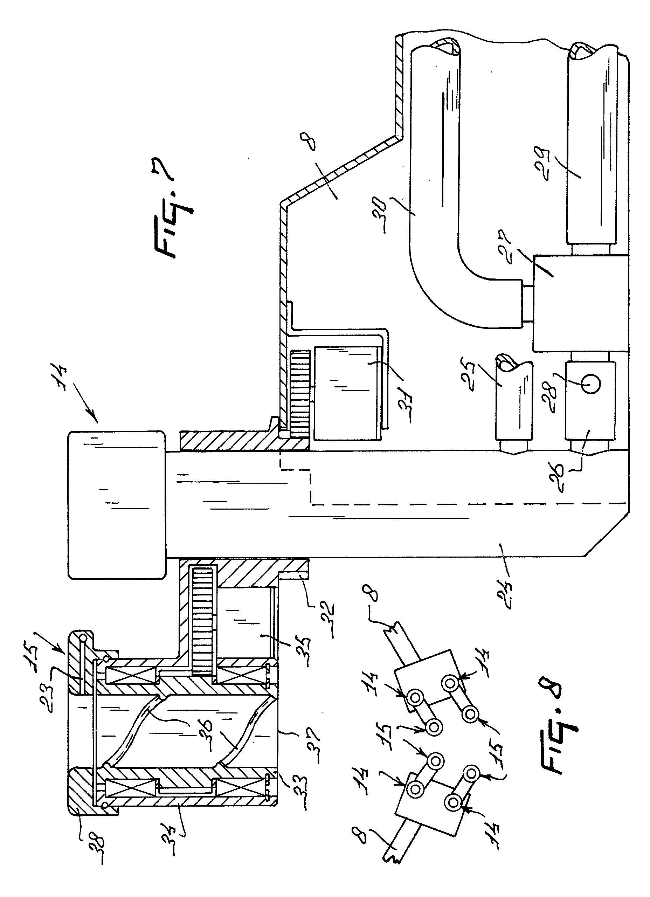

In the embodiment shown all four robot arms 8 are each provided with one milking member 14 and a separate pre-treatment member 15. Each milking member 14 is adapted to milk one of the teats of the animal 3 to be milked and comprises for that purpose a teat cup (known per se) for collecting and conveying the milk yielded, the inside of said teat cup being provided with pulsation means, as will be explained in further detail with reference to Figure 7. Each pre-treatment member 15 is adapted to clean and/or to stimulate and/or to foremilk one of the teats of the animal 3 to be milked, as will be explained in further detail, also with reference to Figure 7.

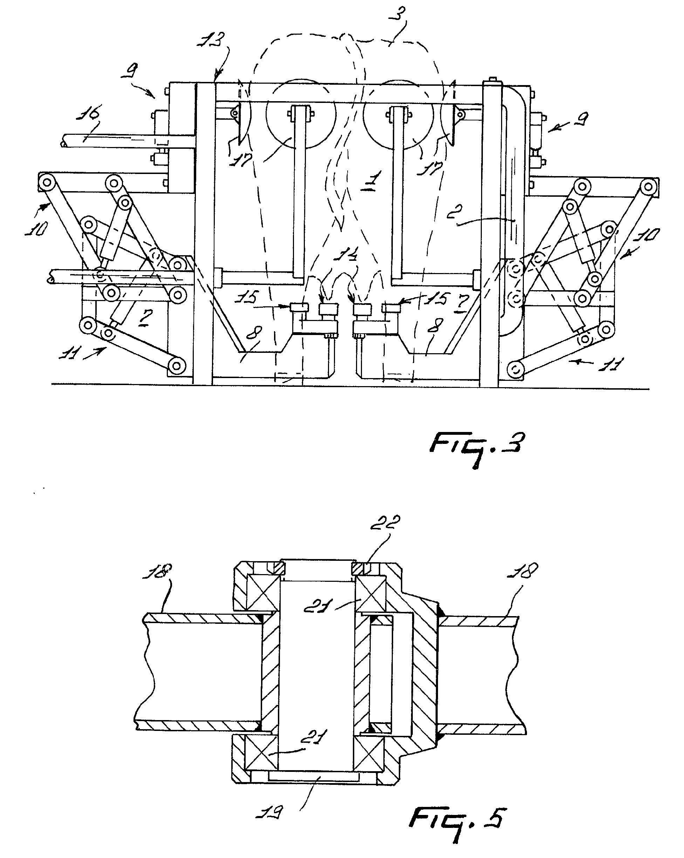

Protective brackets 16 (see Figure 2) ensure the protection of the parallelogram constructions 9, 10, 11 with the robot arms 8. The robot arms 8 are also provided with non-shown detectors for an accurate determination of the position of the teats of the animal 3 to be milked in relation to the relevant robot arms 8. The milkbox 1 is further provided with sensors 17 for determining the position of the animal 3 in relation to the milkbox 1. On the basis of this position, again with the aid of a non-shown computer, the control means are capable of post-controlling the milking members 14 and/or the pre-treatment members 15 for the purpose of tracking possible movements of the animal 3 in the milkbox 1. As shown, the four mechanical sensors 17 are located beside and behind the animal 3. For example with the aid of stepper motors, they are kept with an adjustable light pressure against the animal 3, so that they remain permanently in contact with the animal 3 and every movement can be tracked accurately. To that end the sensors 17 are connected to non-shown receiving elements which generate control signals for the control means of the parallelogram constructions 9, 10, 11.

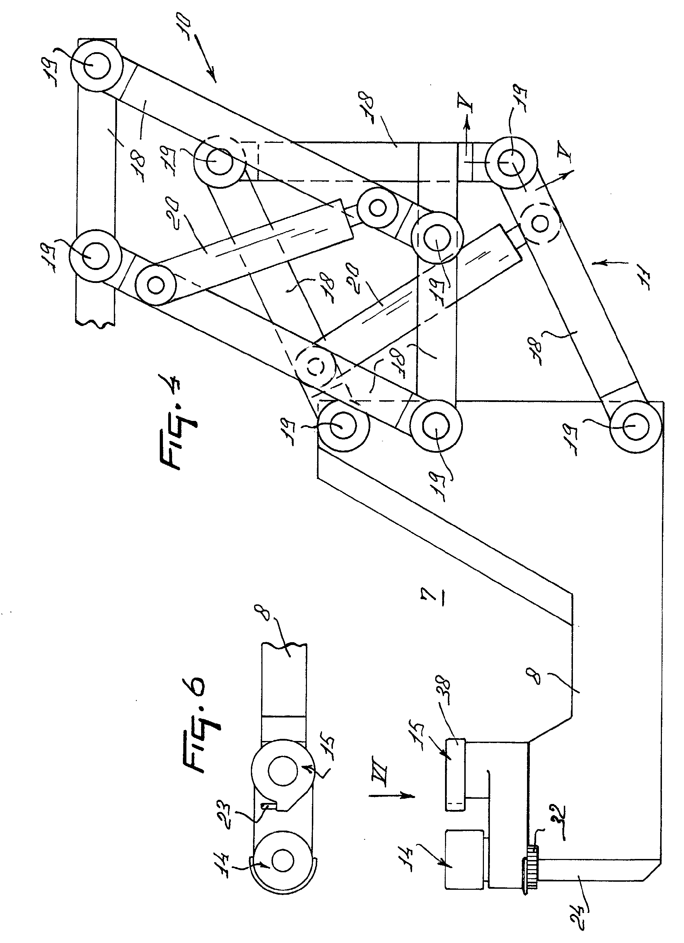

Figure 4 is a schematic side view of a robot arm in a milking position. The robot arm 8 is connected to the frame 13 of the milkbox 1 via the parallelogram constructions 11, 10 and 9 (non-shown in the present figure; see Figures 1 - 3). The parallelogram construction 9 ensures substantially the movement of the robot arm in the longitudinal direction of the milkbox 1. The parallelogram constructions 10 and 11 allow a movement perpendicular to said longitudinal direction and predominantly horizontal, vertical respectively.

The parallelogram constructions 9, 10 and 11 each comprise four arms 18 which are arranged in the shape of a parallelogram via hinge points 19. Furthermore controllable servo-pneumatic (and/or servo-hydraulic) cylinders 20 are hingeably fastened to two opposite sides of the parallelogram, in such a manner that the relevant parallelogram construction is movable by a movement of the piston in the cylinder 20.

At its end being the left-hand one in Figure 4, the robot arm 8 is provided with a milking member 14 and a separate pre-treatment member 15, the latter being fastened to the robot arm 8 so as to be movable relative to the milking member 14. In the embodiment shown the pre-treatment member 15 is rotatably disposed about a central axis of the almost cylindrical milking member 14, as will be explained in further detail with reference to Figure 7.

Figure 5 shows a cross-section taken on the line V - V in Figure 4. The hinge point 19 between the arms 18 of the parallelogram construction 11 is provided with ball bearings 21. Because of the small frictional forces in the ball bearings 21, the hinge point, and along therewith the entire parallelogram construction, can move more quickly, so that a quicker control of the milking robot 7 is possible. In Figure 5 the upper arm 18 is bearing-supported in the hinge point 19 by means of a central pin, represented as a horizontal one, which is bearing-supported in the ball bearings 21 and which is rigidly connected to the upper arm 18. For the purpose of determining the orientation of the robot arm 8, the hinge point 19 is further provided with a clinometer 22 that cooperates with the aforementioned pin. Consequently, a high degree of accuracy in the movement of the robot arm 8 can be obtained. Instead of the parallelogram constructions 9, 10, 11, there may also be used, of course, other hingeable constructions, such as quadrangular hinge constructions.

Figure 6 shows a plan view of a detail of the robot arm of Figure 4 according to the arrow VI in said figure. The milking member 14, which is substantially cylindrical, and the pre-treatment member 15, which is substantially cylindrical as well, are fastened to the robot arm 8 so as to be almost parallel to each other, the pre-treatment member 15 being rotatably disposed around the milking member 14 and being provided with a supply line 23 for cleaning and/or disinfecting fluid for the relevant teat. For the purpose of enabling a rotating movement of the pre-treatment member 15 around the milking member 14 without encountering any problems, the supply line 23 is provided with a connecting piece that is rotatably bearing-supported, as will be explained in further detail with reference to Figure 7.

Figure 7 is a schematic cross-section taken on the line VII - VII in Figure 2. The end of the robot arm 8 is provided with a milking member 14 and a separate pre-treatment member 15 which is fastened to the robot arm 8 so as to be movable (rotatably or slidably) relative to the milking member 14. In the embodiment shown the pre-treatment member 15 is rotatably disposed about a central axis of the substantially cylindrical milking member 14.

Each milking member 14 is adapted to milk one of the teats of the animal 3 to be milked and comprises for that purpose a teat cup 24 (known per se) for collecting and conveying the milk yielded, the inside of said teat cup 24 being provided with (non-shown) pulsation means, such as a flexible, transformable inner case which, with the aid of air-pressure changes produced by a pulsation line 25, alternately milks and releases the relevant teat. Via a milk line 26, in which there is a permanent vacuum (i.e. a lower pressure than the atmospheric pressure), the milk is discharged from the teat cup 24 to a valve 27 which, depending on a signal supplied by a milk quality sensor 28, guides the consumable milk into the production milk line 29 and the other substances (such as e.g. foremilk if any or cleaning fluid) into the residue line 30.

A motor 31 (e.g. a stepper motor) is adapted to drive an annular sleeve 32 that is rotatably bearing-supported around the teat cup 24, to which annular sleeve 32 the pre-treatment member 15 is fastened. Each of the pre-treatment members 15 is adapted to clean and/or to stimulate and/or to foremilk one of the teats of the animal 3 to be milked. To that end the pre-treatment member 15 is provided with a movable, substantially cylindrical or conical case 33. This case 33 is movable in upward and downward direction or, like in the embodiment shown, rotatably bearing-supported in the housing 34 of the pre-treatment member 15 and drivable with the aid of a motor 35 (e.g. a stepper motor).

For the purpose of improving the cleaning and/or the stimulating process of the teat, the inside of the case 33 is provided with a profile 36 which extends substantially as a spiral. The inside of the case 33 preferably consists of a soft material, such as rubber or a soft synthetic material. The lower side of the pre-treatment member 15 is provided with a discharge opening 37 via which cleaning and/or disinfecting fluid and/or foremilk if any can be discharged without the milking member 14 being contaminated. The teat opening of the milking member 14 and that of the pre-treatment member 15 are located almost at the same level.

The supply line 23 for cleaning and/or disinfecting fluid is provided with a connecting piece 38 which is rotatably bearing-supported and whose orientation at a rotation of the pre-treatment member 15 around the milking member 14 remains almost equal. Of course, in the situation of a slidable pre-treatment member 15, the connecting piece 38 can be bearing-supported so as to be slidable as well, in order to avoid problems with the supply line 23 at a sliding movement of the pre-treatment member 15.

In Figure 7 the robot arm 8 is shown in a pre-treatment position: the teat can be pre-treated in the pre-treatment member 15. When the pre-treatment stage has ended, in the subsequent milking stage the milking member 14 is connected to the relevant teat by the control mechanism. After the pre-treatment member 15 has been disconnected from the teat, said pre-treatment member 15 is rotated away by means of the motor 31, whereafter the robot arm 8 brings the milking member 14 to the place that was previously occupied by the pre-treatment member 15. This positioning is very simple because of the fact that the position of the pre-treatment member 15 is already known. By rotating the pre-treatment member 15 away, the latter is prevented from forming an obstacle in the milking stage and e.g. from obstructing the other robot arms 8. In Figures 4 and 6 the robot arm 8 is shown in a milking position: the pre-treatment member 15 has been rotated away and the teat can be milked in the milking member 14. For the purpose of assuming the pre-treatment position, the pre-treatment member 15 is pivoted back into the position shown in Figure 7 by means of the motor 31.

Figure 8 shows schematically another embodiment of the implement. Two robot arms 8 are each provided with two milking members 14 and two separate pre-treatment members 15. This embodiment has the advantage that the pre-treatment stage can be performed quickly. The control is simple because of the fact that there are provided only two robot arms 8. Moreover the movable pre-treatment members 15 enable a highly accurate and quick positioning.

The implement according to the invention makes it possible to perform the pre-treatment stage quickly and efficiently while making use of simple means. Furthermore the pre-treatment stage and the milking stage for different teats can be performed in a different manner and be attuned to the specific conditions. Moreover, because of the mutual movability of the pre-treatment member 15 and the milking member 14, the robot arms 8 are compact and not unnecessarily large in size.

## Claims

1. An implement for milking animals, which implement comprises a milking robot (7) including a number of robot arms (8), **characterized in that** the robot arms (8) comprise at least one hingeable construction (9, 10, 11), such as a quadrangular hinge construction or a parallelogram construction, of which at least one hinge point (19) is provided with a ball bearing (21).

2. An implement as claimed in claim 1, **characterized in that** all hinge points (19) of the hingeable construction (9, 10, 11) are provided with ball bearings (21).

3. An implement as claimed in claim 1 or 2, **characterized in that** at least one hinge point (19) of the hingeable construction (9, 10, 11) is provided with a clinometer (22) for determining the orientation of the robot arm (8).
